# EUROPÄISCHE PATENTSCHRIFT

(11) **EP 2 269 106 B1**
(45) Veröffentlichungstag und Bekanntmachung des Hinweises auf die Patenterteilung: **09.09.2015**
(21) Anmeldenummer: 09721233.6
(22) Anmeldetag: 17.03.2009
(51) Int. Cl.: G02B 26/06

(54) **ADAPTIVER DEFORMIERBARER SPIEGEL ZUR KOMPENSATION VON FEHLERN EINER WELLENFRONT**
ADAPTIVE DEFORMABLE MIRROR FOR COMPENSATING ERRORS OF A WAVE FRONT
MIROIR DÉFORMABLE ADAPTATIF POUR LA COMPENSATION D'ERREURS D'UN FRONT D'ONDE

(30) Priorität: 17.03.2008 DE 102008014615
(43) Veröffentlichungstag der Anmeldung: 05.01.2011
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: REINLEIN, Claudia, 07745 Jena (DE); BECKERT, Erik, 99310 Arnstadt (DE); PESCHEL, Thomas, 07743 Jena (DE); DAMM, Christoph, 07743 Jena (DE)
(74) Vertreter: Pfenning, Meinig & Partner GbR
(86) Internationale Anmeldenummer: PCT/EP2009/001967
(87) Internationale Veröffentlichungsnummer: WO 2009/115302

(56) Entgegenhaltungen:
- WO-A-2006/046078
- WO-A-2009/007447
- GB-A- 2 238 880
- JP-A- 2006 011 022
- US-A1- 2004 165 243
- US-A1- 2004 190 110

## Beschreibung

Die vorliegende Erfindung bezieht sich auf die Realisierung eines adaptiven deformierbaren Spiegels zur Kompensation von Fehlern einer Wellenfront.

Adaptiv deformierbare Spiegel kommen in unterschiedlichen Bereichen der Optik zum Einsatz, so z.B. in terrestrischen oder außerterrestrischen Anwendungen, aber auch in Experimenten mit elektromagnetischer Strahlung mit hoher Leistung, wie sie von Hochleistungslasern und/oder Hochleistungslaserverfahren emittiert wird, oder in Experimenten mit tiefer oder extremer ultravioletter Strahlung.

Speziell für den Einsatz bei tiefer oder extremer ultravioletter Strahlung wurden diverse Ausführungsformen adaptiver Spiegel entwickelt. Die Grundidee besteht darin, dass eine Spiegelfläche mittels Aktoren derart deformiert wird, dass Fehler in einer einfallenden Wellenfront kompensiert werden können. Die Aktoren können einerseits senkrecht zur Spiegelschicht wirken, andererseits in Form von Schichten aufgebracht sein. Je nach Anwendungsbereich kann die Diske der Spiegelschicht und/oder der Aktoren bzw. der aktiven Schicht über den Durchmesser des adaptiven Spiegels variieren. Durch die Variation der Dicke der aktiven Schicht können für die Verformung des Spiegelsubstrates in Abhängigkeit von der radialen Position unterschiedliche Kräfte eingestellt werden. Dabei erfolgt die Änderung der Schichtdicke kontinuierlich und stetig. Aufgrund der hohen Leistung der einfallenden Strahlung und deren Absorption kann es zu Verformungen der Spiegelschicht kommen. Eine Möglichkeit, solche unerwünschten Verformungen zu vermeiden, bietet ein adaptiver Spiegel, dessen Spiegelfassung, die aus demselben Material besteht, wie die Schicht, auf der die Spiegelfläche aufgebracht ist, als Wärmesenke fungiert und somit die Spiegelmembran künlt. Des Weiteren wurden adaptive Spiegel vorgescalagen, deren Krümmung variabel ist und die somit in verschiedenen Anwendungsgebieten einsetzbar sind.

Die GB 2 238 880 A beschreibt einen deformierbaren Spiegel mit einer photo-leitenden Schicht, die auf eine rückseitig mit einer reflektierenden Schicht versehene, piezoelektrische Schicht aufgebracht ist.

Ein weiteres Bespiel für einen deformierbaren Spiegel beschreibt die US 2004/0190110 A1. Der darin offenbarte Spiegel ist aus einer Vielzahl an hexagonalen Spiegelsegmenten zusammengesetzt, deren Ausrichtung jeweils unabhängig voneinander einstellbar ist. Auch die US 2004/0165243 A1 beschreibt eine Anordnung von getrennt steuerbaren Spiegelsegmenten, die in ihrem Aufbau im Wesentlichen dem in der US 2004/0190110 A1 offenbarten, deformierbaren Spiegel entspricht.

Die WO 2006/046078 A1 offenbart einen verformbaren Spiegel mit einer wärmeabführenden Schicht aus Diamant, die auf ihrer einen Seite eine reflektierende Schicht und auf ihrer anderen Oberfläche eine zwischen Elektroden liegende Aktorschicht aufweist.

Der bisherige Stand der Technik erfordert einen hohen Fertigungs- und Montageaufwand, um die Aktoren bzw. die aktiven Schichten entsprechend mit der Spiegelfläche zu verbinden und/oder um die gewünschte Krümmung der Spiegelschicht dauerhaft herzustellen. Weiterhir kommt es aufgrund der großen Schichtdicke der Spiegelfläche zu thermischen Verformungen, die durch die hohe Leistung der einfallenden Strahlung hervorgerufen wird. Diese thermischen Verformungen müssen in herkömmlichen adaptiven Spiegeln dann zusätzlich zu den Fehlern in der Wellenfront mit Hilfe der Aktoren kompensiert werden oder durch Integration von thermisch besonders hochleitenden Schichten vermieden werden, so dass die Wärme abgeführt wird, ohne dass eine thermische Verformung auftritt, was die präzise Kompensation von Fehlern in der Wellenfront erschwert.

Ziel der Erfindung ist es somit, einen adaptiven Spiegel sowie ein Verfahren zu seiner Herstellung zur Verfügung zu stellen, das auf einfache Weise gefertigt werden kann und dessen Aufbau eine thermische Verformung durch hohe Leistung der einfallenden Strahlung nicht oder nur bedingt zulässt.

Die oben genannten Aufgaben werden durch den in Anspruch 1 angegebenen adaptiven Spiegel gelöst. Vorteilhafte Ausführungsformen des erfindungsgemäßen adaptiven Spiegels werden in den jeweiligen abhängigen Ansprüchen gegeben. Die Herstellung des adaptiven Spiegels erfolgt erfindungsgemäß nach Anspruch 25 sowie in dessen vorteilhaften Ausführungsformen gemäß den zugehörigen abhängigen Ansprüchen.

Der erfindungsgemäße adaptive Spiegel besteht in seiner einfachsten Form aus einer dünnen Substratschicht, auf deren erster Oberfläche eine reflektive Schicht aufgebracht ist und deren zweite Oberfläche mit mindestens einem Aktor verbunden ist. Erfindungsgemäß weist die Substratschicht eine Dicke kleiner oder gleich 1000 µm auf. Eine solch geringe Dicke der Substratschicht ist notwendig, um thermische Verformungen durch die hohe Leistung der einfallenden Strahlung zu vermeiden bzw. wenigstens zu minimieren. Da die Wärmeausdehnung proportional zur Substratdicke ist, folgt aus der Bedingung, dass die Dicke der Substratschicht 1000 µm oder weniger beträgt, lediglich eine geringe thermische Verformung. Des Weiteren sind die Wärmeausdehnungskoeffizienten der verwendeten Materialien für die reflektierende Schicht und die Substratschicht angepasst. Dennoch entstehende thermische Verformungen sind von derart geringem Ausmaß, dass sie leicht mittels der Aktoren kompensiert werden können.

Um thermische Verformungen weiter zu minimieren, ist eine Substratschicht, die eine Dicke in Abhängigkeit vom Substrat und dessen E-Modul aufweist, vorteilhaft. Beispielsweise beträgt die Dicke bei Al₂O₃ maximal 500 µm, bei LTCC maximal 400 µm und bei Silizium maximal 700 µm. Die Dicke der Substratschicht soll weiterhin größer oder gleich 50 µm, bevorzugt größer oder gleich 100 µm sein, um eine gewisse Stabilität der Schicht zu garantieren. Die Substratschicht und damit der gesamte adaptive Spiegel weist einen Durchmesser im Bereich 25 mm bis 150 mm, insbesondere jedoch im Bereich von 50 mm bis 100 mm bzw. 50 mm bis 70 mm auf. Die Maße des verwendeten adaptiven Spiegels richten sich nach der Art der Anwendung und des Substrats.

Als Materialien für die Substratschicht kommen bevorzugt keramische Materialien zum Einsatz. Vorzugsweise werden unterschiedliche Glaskeramiken verwendet, wie beilspielsweise Niedertemperatur-Einbrand-Keramiken (LTCC), Aluminiumoxidkeramiken (Al₂O₃), Aluminium-nitridkeramiken (AlN), Zirkonoxid (ZrO₂), Cordieritwerkstoffe und darauf basierende Varianten mit niedringen thermischen Ausdehnungskoeffizienten, Titanium-Silikatglas, wie beispielsweise ULE und weitere Glaskeramiken mit sehr niedrigen thermischen Ausdehnungskoeffizienten, wie beispielsweise Clearceram-Z der Firma Ohara, Zerodur der Firma Schott AG und/oder Astrosital. Hinsichtlich der Zusammensetzung von Clearceram-z wird auf die US 5, 591, 682 verwiesen. Unter Niedertemperatur-Einbrand-Keramiken sind beispielsweise Grünfolien bestehend aus Al₂O₃ mit einem Glasanteil bis zu 50 % und organischen Bindern, die aufeinander laminiert und anschließend gesintert sind, zu verstehen. Als Cordieritwerkstoffe kommen Low CTE Cordierite™ in Frage. Darauf basierend können beispielsweise Magnesiumaluminiumsilikate mit der vereinfachten Näherung der Zusammensetzung von reinem keramischem Cordierit, das definierte Anteile an MgO, Al₂O₃ und SiO₂ enthält, verwendet werden. Die Anteile können beispielsweise zu 14 % MgO, 35 % Al₂O₃ und 51 % SiO₂ aufgeteilt sein.

Weiterhin können Silizium und Glasmaterialien, wie Kieselglas und/oder polykristalliner Diamant, der beispielsweise mittels chemischer Gasphasenabscheidung hergestellt sein kann, zum Einsatz kommen. Ebenso können DCB-Substrate (Direct Copper Bonded) als Substratschicht Verwendung finden. Dabei handelt es sich um Materialien, die bereits auf ihrer Vordersowie auf ihrer Rückseite metallisiert sind. So kann z.B. auf eine Aluminiumoxidkeramik und/oder eine Aluminiumnitridkeramik eine Kupferschicht gebondet sein. Solche Produkte können von der Firma Electrovac curamik GmbH bezogen werden. Die Metallisierung kann später als Spiegelschicht und/oder als Elektrode für die Aktoren dienen.

Vorzugsweise weist die reflektierende Schicht eine Dicke zwischen 10 µm und 200 µm auf. Bevorzugt liegt die Dicke jedoch zwischen 20 µm und 100 µm, insbesondere jedoch zwischen 40 µm und 60 µm. Um wiederum thermische Verformungen durch hohe Leistung der einfallenden Strahlung zu vermeiden, bietet sich auch im Fall der reflektierenden Schicht eine möglichst geringe Dicke an.

Als Materialien für die reflektierende Schicht bieten sich bevorzugt Metalle und/oder Halbmetalle, insbesondere Kupfer, Nickel, Nickelphosphor, Gold, Wolfram, Molybdän, Titan, Silizium und/oder deren Legierungen an. Je nach Materialwahl wird die reflektierende Schicht auf die Substratschicht galvanisch und/oder chemisch abgeschieden und/oder über Siebdruckprozesse aufgebracht. In Einzelfällen können reflektierende Schicht und Substratschicht aneinander gebondet sein, so beispielsweise wenn Silizium mit einer Niedertemperatur-Einbrand-Keramik verbunden wird (Black Silicon auf LTCC).

Vorzugsweise ist der Wärmeausdehnungskoeffizient der reflektierenden Schicht, wenn diese beispielsweise metallische Materialien enthält, größer oder gleich groß wie der Wärmeausdehnungskoeffizient des Substrates. Enthält die reflektierende Schicht dagegen beispielsweise Silizium und die Substratschicht LLTC, so kann es dazu kommen, dass der Wärmeausdehnungskoeffizient der reflektierenden Schicht kleiner oder gleich dem Wärmeausdehnungskoeffizienten des Substrates ist oder die Wärmeausdehnungskoeffizienten von Substrat und reflektierender Schicht und/oder aktorischer Schicht aneinander angepasst sind.

Vorzugsweise wird zur Kompensation von Fehlern in Wellenfronten nicht nur ein Aktor, sondern mehrere Aktoren verwendet. Diese Aktoren können übereinander und/oder nebeneinander, beispielsweise als mehrlagige Dickschicht oder als ein- oder mehrlagige Scheiben, angeordnet sein. Die Anzahl der übereinander liegenden Aktoren kann dabei über den Durchmesser des erfindungsgemäßen adaptiven Spiegels variieren. Durch eine solche Anordnung der Aktoren kann die Spiegelüber einen unterschiedlichen Krafteintrag auf die Spiegelfläche deformiert werden, entsprechend der Fehler der einfallenden Wellenfront. Die einzelnen Aktoren können bevorzugt aus einer aktiven Schicht (Aktorschicht) aufgebaut sein, an deren Vorder- sowie Rückseite elektrisch leitfähige Schichten, die als Elektroden dienen, aufgebracht sind. Diese elektrisch leitfähigen Schichten sind dünn gegenüber der aktiven Schicht und weisen eine größere Wärmeausdehnung als diese auf. Die elektrisch leitfähigen Schichten werden mittels Siebdruck-, Klebe- oder Lötverfahren auf die aktive Schicht aufgebracht.

Als Materialien für die aktive Schicht der Aktoren kommen bevorzugt piezoelektrische Materialien zum Einsatz. Weiter können aber auch ferroelektrische Materialien, magnetostriktive Materialien und/oder elektrostriktive Materialien, aber auch Formgedächtnislegierungen und/oder andere geeignete Materialien verwendet werden.

Die elektrisch leitfähigen Schichten sollten vorzugsweise in Teilelektroden strukturiert sein, um entsprechend angesteuert werden zu können. Je nach Fehler der Wellenfront muss der adaptive Spiegel an unterschiedlichen Orten deformiert werden, so dass die einzelnen Aktoren bzw. einzelne Gebiete der aktiven Schicht über die Teilelektroden unabhängig voneinander angesteuert werden müssen.

Die Teilelektroden auf der jeweiligen aktiven Schicht können beliebig angeordnet sein. Vorteilhafterweise bietet sich eine wabenförmige oder aber eine tortenförmige Anordnung an. Auch eine regelmäßige Anordnung von quadratischen Teilelektroden wäre denkbar.

Die aktive Schicht weist bevorzugt eine Dicke zwischen 50 µm und 300 µm, insbesondere eine Dicke zwischen 80 µm und 150 µm auf.

Die reflektierende Schicht ist vorzugsweise aus einer metallischen Startschicht, die vorzugsweise Gold, Kupfer, Nickel, Silber, Palladium, Titan und/oder Aluminium aufweist und auf die Substratschicht aufgesputtert ist, sowie einer galvanisch oder chemisch abgeschiedenen reflektierenden Schicht aufgebaut. Andererseits kann die reflektierende Schicht aber auch mit der Substratschicht gebondet sein oder über siebdruckprozesse aufgebracht werden.

Die reflektierende Schicht kann aus einem reflektiven Metallspiegel bestehen. Ebenso kann die reflektive Schicht aus einem reflektiven Metallspiegel mit einer zusätzlichen Multilayerschicht, die den Reflektionsgrad erhöht, bestehen. Eine weitere Variante sieht vor, dass die reflektierende Schicht aus einem reflektiven Metallspiegel mit einer zusätzlichen dielektrischen Schicht besteht, die den Reflektionsgrad erhöht und den Absorptionsgrad senkt.

Die auf die Substratschicht aufgebrachte reflektierende Schicht ist ihrerseits in optischer Qualität mittels Diamantbearbeitung strukturiert. Dabei wird die reflektierende Schicht einerseits für optische Anwendungen entsprechend glatt geschliffen, andererseits wird die reflektierende Schicht gegebenenfalls mit einer Krümmung versehen. Es können aber auch plane reflektierende Schichten zum Einsatz kommen.

Des Weiteren ist die reflektierende Schicht mit einer hochreflektierenden Schichtfolge beschichtet, um einen möglichst hohen Reflexionsgrad zu erhalten.

Der adaptive Spiegel weist mindestens eine weitere Metallisierung auf, die zur thermischen Kompensation dient. Hierdurch wird eine thermische Verformung des adaptiven Spiegels vermieden oder so voreingestellt, dass sich die gewünschte Krümmung abhängig von der reflektierten Leistung einstellt. Derartige Metallisierungen, können an beliebiger Position im Spielgel integriert sein. So können die Metallisierungen zwischein einzelnen Substratlagen, insbesondere Keramiklagern, oder auf der zweiten Oberfläche, d.h. über dem piezoelektrischen Aktor, angeordnet sein. Für die Metallisierung kommen bevorzugt Metalle und/oder Halbmetalle, insbesondere Kupfer, Nickel, Nickelphosphor, Gold, Wolfram, Molybdän, Titan, Silicium und/oder deren Legierungen in Frage. Die zusätzlichen Metallisierungen können galvanisch und/oder chemisch abgeschiedene oder durch Siebdruckprozesse aufgebracht werden.

Die Fassungen der Spiegel bestehen vorzugsweise aus demselben Material wie die jeweilige Substratschicht und können strukturiert sein, um eine erhöhte Nachgiebigkeit und damit eine gesteigerte Auslenkung zu erreichen.

Zur Herstellung des adaptiven Spielgels wird auf eine erste Oberfläche der Substratschicht, deren Dicke erfindungsgemäß maximal 1000 µm beträgt, eine reflektierende Schicht, auf eine zweite Oberfläche der Substratschicht ein oder mehrere Aktoren aufgebracht.

Vor Aufbringen der reflektierenden Schicht wird vorzugsweise zunächst eine metallische Startschicht aufgesputtert. Auf der metallischen Startschicht wird eine reflektierende Schicht galvanisch oder chemisch abgeschieden. Zum Starten der Abscheidung der kann die Startschicht beispielsweise mit Palladium bekeimt werden oder das Abscheiden kann durch einen kurzen Stromstoß ausgelöst werden. Beim Abkühlen der abgeschiedenen Schicht von der Abscheidungstemperatur auf Raumtemperatur kommt es zu einer thermischen Verformung, die je nach thermischem Ausdehnungskoeffizienten von reflektierender Schicht und Substratschicht konkav oder konvex ausfallen kann. Da vorzugsweise der thermische Ausdehnungskoeffizient der reflektierenden Schicht größer als der der Substratschicht ist, kommt es bevorzugt zu einer konkaven Verformung. Die jeweilige Verformung wird mittels Diamantbearbeitung entsprechend der jeweiligen Anwendung plan oder mit Krümmung strukturiert.

Eine weitere Möglichkeit, die reflektierende Schicht auf die Substratschicht aufzubringen, besteht darin, dass beide Schichten durch Bonden miteinander verbunden werden. Dieses Vorgehen betrifft beispielsweise die Verbindung von LTCC als Substratschicht und Silizium als reflektierende Schicht.
Alternativ kann als Substratschicht von vornherein eine DCB-Schicht verwendet werden.

Nach dem Aufbringen der reflektierenden Schicht auf die Substratschicht kann die reflektierende Schicht mittels Diamantbearbeitung in optischer Qualität strukturiert werden. Anschließend kann die reflektierende Schicht noch mit einer hochreflektiven Schichtfolge beschichtet werden.

Die hochreflektive Schichtfolge enthält vorzugsweise dielektrische Materialien. Der oder die Aktoren werden bevorzugt mit Hilfe von Siebdruckverfahren, Klebeverfahren und/oder Lötverfahren aufgebracht.

Im Folgenden werden einige Beispiele erfindungsgemäßer adaptiver Spiegel und Anordnungen gegeben. Es zeigt:
- Figur 1: einen Grundaufbau eines erfindungsgemäßen adaptiven Spiegels,
- Figur 2: einen Aufbau einer Ausführung eines erfindungsgemäßen adaptiven Spiegels, und
- Figur 3: eine Draufsicht auf einen adaptiven Spiegel mit verschiedenen Ansteuerungsmethoden über unterschiedlich angeordnete Teilelektroden.

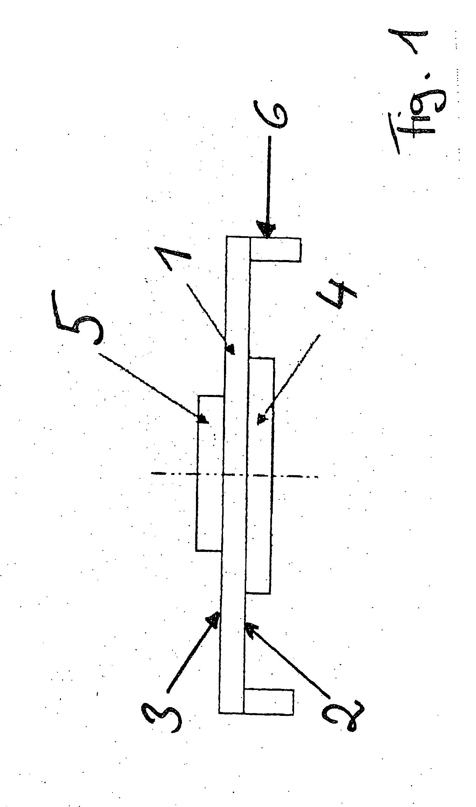

Figur 1 zeigt den Querschnitt durch einen adaptiven Spiegel, wie er in der vorliegenden Erfindung beschrieben ist. Dabei bezeichnen hier wie in den folgenden Figuren gleiche oder ähnliche Bezugszeichen gleiche oder ähnliche Elemente.
Der adaptive Spiegel ist aus einer maximal 1000 µm dicken Substratschicht 1 aufgebaut, auf deren erster Oberfläche 2 eine reflektierende Schicht 4 und auf deren zweiter Oberfläche 3 mindestens ein Aktor 5 aufgebracht ist. An den Rändern der Substratschicht 1 auf ihrer ersten Oberfläche 2 ist eine Halterung 6 angebracht, die für LTCC dasselbe Material wie die Substratschicht aufweist. Bei anderen Substratmaterialien können auch vom Substratmaterial verschiedene Materialien für die Halterung eingesetzt werden.

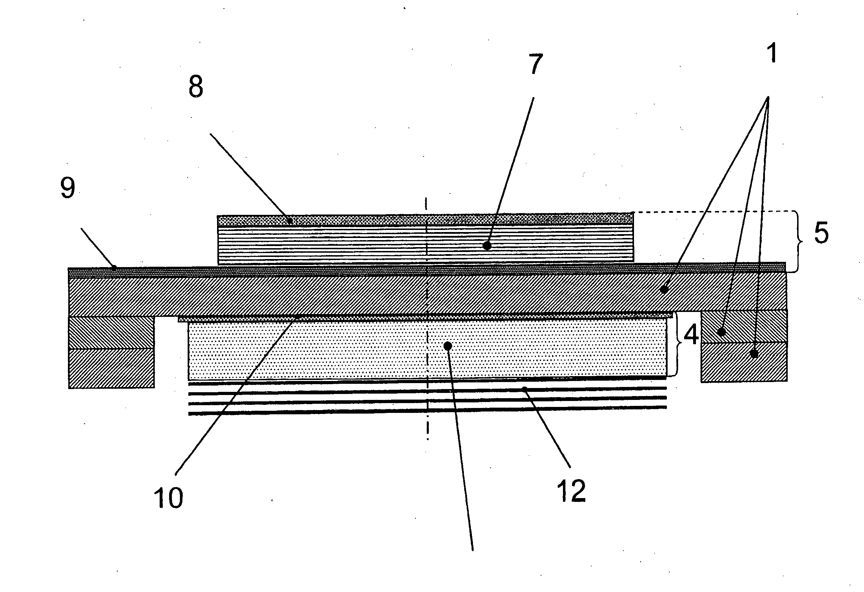

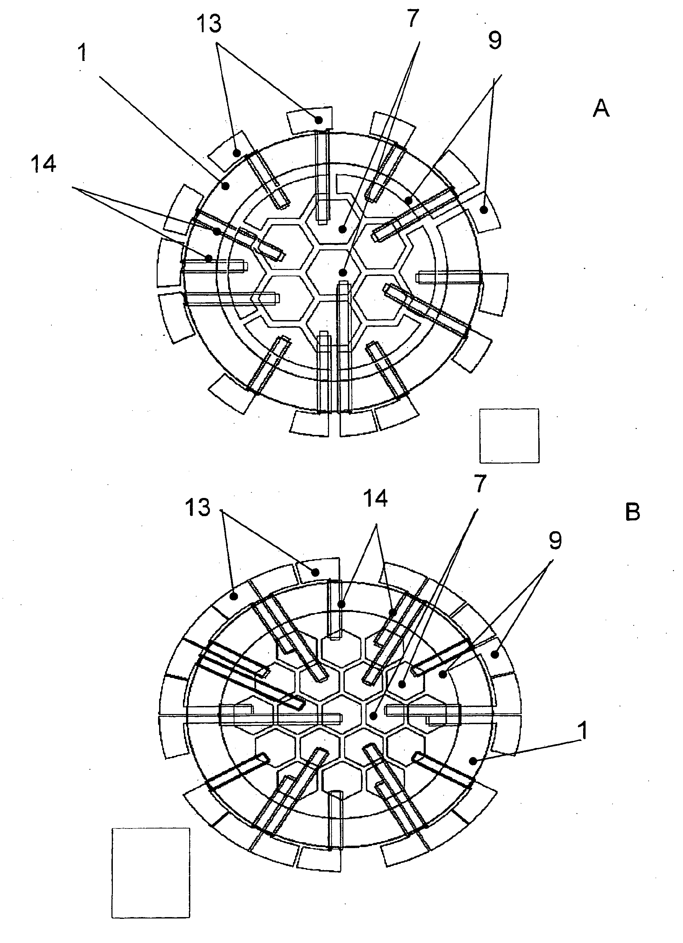

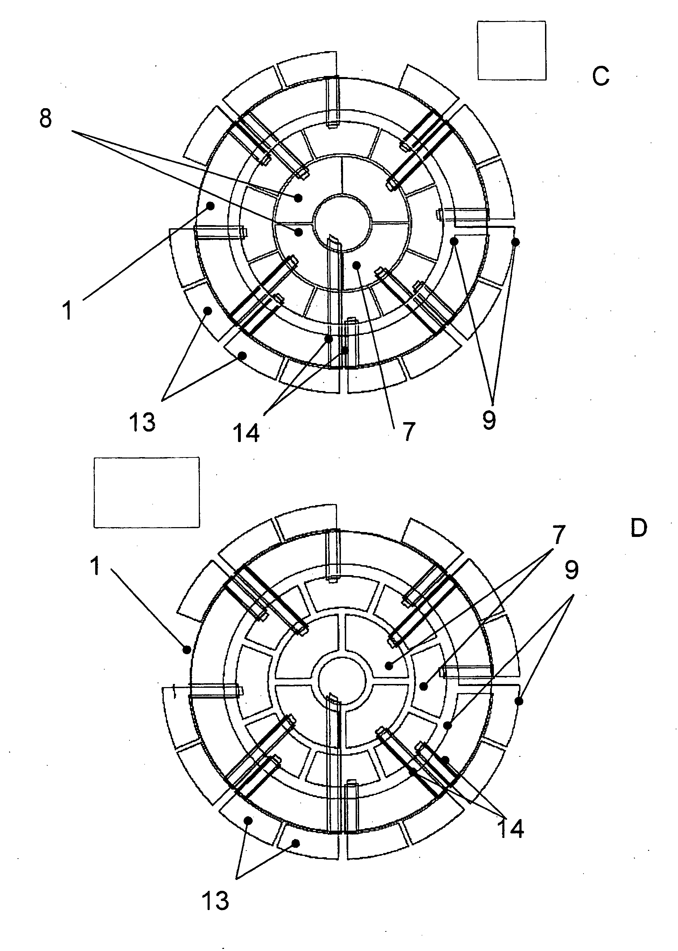

Figur 2 zeigt wiederum einen Querschnitt durch einen adaptiven Spiegel, der jedoch einem bevorzugten Ausführungsbeispiel entspricht. Wieder ist der adaptive Spiegel aus einer Substratschicht 1 aus LTCC, einer reflektierenden Schicht 4 und mindestens einem Aktor 5 aufgebaut. Der Aktor ist hier aus einer aktiven Schicht 7 aus einem piezoelektrischen Material aufgebaut, die sich zwischen zwei elektrisch leitfähigen Schichten befindet, nämlich einer Deckelektrode 8 und einer Grundelektrode 9, die sich zwischen der aktiven Schicht 7 und der Substratschicht 1 befindet. Die Deckelektrode 8 und/oder die aktive Schicht 7 kann entsprechend Figur 3 strukturiert sein.
Die reflektierende Schicht 4 ist auch aus zwei Komponenten aufgebaut, nämlich einer aufgesputterten metallischen Startschicht 10 und einer galvanisch oder chemisch abgeschiedenen Metallschicht 11. Die reflektierende Schicht 4 kann weiterhin mit einer hochreflektiven Schichtfolge aus vorzugsweise dielektrischen Materialien beschichtet sein.

Figur 3A zeigt eine Draufsicht auf einen adaptiven Spiegel. Kreisförmig erkennt man die Substratschicht 1. Darüber befindet sich eine Grundelektrode 9, über welcher sich eine aktive Schicht 7 aus piezoelektrischem Material, die wabenförmig strukturiert ist, befindet. Diese wabenförmigen aktiven Schichtteile 7 können über Kontakte 13 angesteuert werden. Da zur präzisen Ansteuerung jeder wabenförmige Teil der aktiven Schicht 7 einzeln angesteuert werden soll, ist jeder einzelne Kontakt 13 über Passivierungen 14 von den Teilen der aktiven Schicht 7 isoliert, die er nicht ansteuern soll. Figur 3B unterscheidet sich von Figur 3A dahingehend, dass die Deckelelektrode im Vergleich zu Figur 3A in kleinere wabenförmige Teile strukturiert ist und die aktive Schicht nicht strukturiert ist. Auch Figur 3D zeigt gegenüber den Figuren 3A und B nur den Unterschied, dass die aktive Schicht 7 nicht wabenförmig unterteilt ist, sondern tortenförmig.
In Figur 3C erkennt man eine kreisförmige Substratschicht 1, über der wiederum die Grundelektrode 9 liegt. Darüber befindet sich eine unstrukturierte aktive Schicht 7 aus piezoelektrischem Material. Darüber liegt eine tortenförmig strukturierte Deckelektrode 8, die über Kontakte 13, die mit Passivierungen 14 versehen sind, angesteuert werden.

Im Folgenden soll noch die Herstellung einer außenstromlos abgeschiedenen Nickel-Phosphor-Schicht mit Phosphorgehalten über 10,5 % auf metallisierten LTCC-Substraten erläutert werden. Die Dicke der Nickel-Phosphor-Schicht soll über 25 µm betragen, da dies für eine UP-Bearbeitung notwendig ist.
Als Substrat wird ein LTCC-Substrat mit einem Durchmesser von 40 mm und einer Dicke von 150 µm. Die metallisierte Fläche soll eine Abmessung von 7cm² haben. Die Startschicht, eine Metallisierung beispielsweise aus Gold, soll einen Durchmesser von 30 mm besitzen.
Als Elektrolyt für die außenstromlose Abscheidung einer Nickel-Phosphor-Legierung wurde Hessonic HP-6 der Dr. Hesse GmbH & CIE KG ausgewählt.
Zunächst wird 1 1 des Elektrolyten Hessonic HP-6 nach Vorschrift angesetzt und auf 90°C aufgeheizt. Danach wird der Nickelgehalt auf 5,4 g/l und der pH-Wert auf 5,1 eingestellt. Anschließend wird das LTCC-Substrat in eine dafür vorgesehene PMMA-Halterung eingebaut und anschließend mit Isopropanol entfettet. Und mit deionisiertem Wasser gespült. Um die metallisierte Fläche zu aktivieren wird diese für 2 Minuten in 30%-ige Salpetersäure getaucht und danach wieder mit deionisiertem Wasser gespült.
So vorbehandelt wird das gehalterte Substrat so in den aufgeheizten Elektrolyten gehängt, dass die zu beschichtende Fläche schräg nach unten zeigt. Die Reaktion wird mit Hilfe eines Eisenstabs gestartet. Für die Badbewegung sorgt ein Magnetstabrührer mit einer Drehzahl von 130 U/min. Eine Warenbewegung erfolgt nicht. Nach 2,5 Stunden wird das Substrat aus dem Elektrolyten genommen, langsam auf Raumtemperatur abgekühlt und aus der Halterung ausgebaut. Die Schichtdicke beträgt 25 µm.

Die vorliegende Erfindung stellt also einen adaptiven Spiegel zur Verfügung, der zur Kompensation von Fehlern in Wellenfronten eingesetzt wird. Der erfindungsgemäße adaptive Spiegel ist vor allem für Anwendungen mit Hochleistungslasern und/oder Hochleistungsfaserlasern geeignet, da es aufgrund geringer Dicke lediglich zu geringen thermischen Verformungen kommen kann. Somit müssen die Aktoren im Wesentlichen nur die Fehler der Wellenfront an sich kompensieren und nicht die thermischen Verformungen.

## Patentansprüche

1. Adaptiver Spiegel mit einer Substratschicht (1), auf deren erster Oberfläche(2) eine reflektierende Schicht (4) und auf deren zweiter Oberfläche (3) mindestens ein Aktor (5) angeordnet ist, wobei der Aktor (5) eine aktive Schicht (7) und auf einer Vorder- und einer Rückseite der aktiven Schicht (7) angeordnete Elektroden (8,9) aufweist, wobei die Substratschicht (1) eine Dicke kleiner oder gleich 1000 µm aufweist, und wobei die reflektierende Schicht (4) aus Metall und/oder Halbmetall besteht,
**dadurch gekennzeichnet, dass**
der Spiegel mindestens eine weitere Metallisierung zur thermischen Kompensation aufweist, wodurch eine thermische Verformung des Spiegels verhindert oder derart voreingestellt wird, dass sich eine gewünschte Krümmung des Spiegels abhängig von der reflektierten Leistung einstellt,
wobei die weitere Metallisierung ein Metall aufweist und in die Substratschicht (1) integriert oder über dem Aktor (5) angeordnet ist.

2. Adaptiver Spiegel nach dem vorhergehenden. Anspruch, **dadurch gekennzeichnet, dass** die Substratschicht (1) in Abhängigkeit vom Substratmaterial eine Dicke von 100 µm bis 500 µm bei Al₂O₃, von 90 µm bis 400 µm bei Niedertemperatur-Einbrand-keramiken (LTCC) oder von 300 µm bis 800 µm bei Silizium aufweist.

3. Adaptiver Spiegel nach einem der vorhergehenden Ansprüche, **dadurch gekennzeichnet, dass** sein Durchmesser größer als 25 mm, insbesondere größer als 50 mm, und/oder kleiner als 150 mm, insbesondere kleiner als 100 mm, ist.

4. Adaptiver Spiegel nach einem der vorhergehenden Ansprüche, **dadurch gekennzeichnet, dass** die mindestens eine weitere Metallisierung in die Substratschicht (1) integriert oder auf der zweiten Oberfläche (3) angeordnet ist.

5. Adaptiver Spiegel nach einem der vorhergehenden Ansprüche, **dadurch gekennzeichnet, dass** die Substratschicht (1) keramische Materialien, insbesondere Glaskeramiken wie LTCC-Keramiken, Aluminiumoxidkeramik (Al₂O₃), Aluminiumnitridkeramik (AlN), Grünfolien aus Al₂O₃-Pulver und organschen Bindern, Zirkonoxid (ZrO₂), Cordieritwerkstoffe, Clearceram-Z, oder Astrosital, Titanium-Silikatglas und Lithium-Aluminosilikat-Glaskeramiken, und/oder Silizium- und Glasmaterialien wie Kieselglas, und/oder polykristallinen Diamant enthält oder aus einem oder mehreren dieser Materialien besteht.

6. Adaptiver Spiegel nach einem der vorhergehenden Ansprüche, **dadurch gekennzeichnet, dass** die reflektierende Schicht (4) eine Dicke zwischen 10 µm und 200 µm, bevorzugt zwischen 20 µm und 100 µm, besonders bevorzugt zwischen 40 µm und 60 µm aufweist.

7. Adaptiver Spiegel nach einem der vorhergehenden Ansprüche, **dadurch gekennzeichnet, dass** die reflektierende Schicht (4) eine Schicht aus metallischen Materialien, insbesondere Kupfer, Ni-ckel, Nickelphosphor, Gold, Silber, Wolfram, Molybdän, Titan, Silizium und/oder deren Legierungen, aufweist.

8. Adaptiver Spiegel nach einem der vorhergehenden Ansprüche, **dadurch gekennzeichnet, dass** der Wärmeausdehnungskoeffizient der reflektierenden metallischen Schicht (4) größer ist als der Wärmeausdehnungskoeffizient der Substratschicht (1).

9. Adaptiver Spiegel nach einem der vorhergehenden Ansprüche, **dadurch gekennzeichnet, dass** die Aktorschicht (7) zwischen zwei elektrisch leitfähigen Schichten (8, 9) angeordnet ist, die dünn gegenüber der Aktorschicht (7) sind.

10. Adaptiver Spiegel nach dem vorhergehenden Anspruch, **dadurch gekennzeichnet, dass** die Aktorschicht (7) ein piezoelektrisches Material und/oder ein ferroelektrisches Material und/oder ein magnetostriktives Material und/oder ein elektrostriktives Material und/oder Formgedächtnislegierungen und/oder andere geeignete Materialien enthält oder aus einem oder mehreren dieser Materialien besteht.

11. Adaptiver Spiegel nach Anspruch 9 oder 10, dardurch gekennzeichnet, dass die elektrisch leitfähigen Schichten (8, 9) in Teilelektroden strukturiert sind, wobei die Teilelektroden wabenförmig oder tortenförmig, quadratisch oder durch Kombination dieser geometrischen Formen angeordnet sind.

12. Adaptiver Spiegel nach einem der Ansprüche 9 bis 11, **dadurch gekennzeichnet, dass** eine einzelne Aktorschicht (7) eine Dicke zwischen 50 µm und 300 µm, insbesondere eine Dicke zwischen 80 µm und 150 µm aufweist.

13. Adaptiver Spiegel nach einem der vorhergehenden Ansprüche, **dadurch gekennzeichnet, dass** auf die Substratschicht (1) eine Startschicht (10) aufgesputtert ist, wobei auf die aufgesputterte Startschicht (10) eine reflektierende Schicht (11) galvanisch oder chemisch abgeschieden ist oder über Siebdruckprozesse aufgebracht ist.

14. Adaptiver Spiegel nach dem vorhergehenden Anspruch, **dadurch gekennzeichnet, dass** die galvanisch oder chemisch abgeschiedene oder über Siebdruckprozesse aufgebrachte reflektierende Schicht (11) in optischer Qualität strukturiert ist.

15. Adaptiver Spiegel nach einem der Ansprüche 13 oder 14, **dadurch gekennzeichnet, dass** die galvanisch oder chemisch abgeschiedene oder über Siebdruckprozesse aufgebrachte reflektierende Schicht (11) mit einer hochreflektiven Schichtfolge (12) beschichtet ist.

16. Adaptiver Spiegel nach einem der vorhergehenden Ansprüche, **dadurch gekennzeichnet, dass** die Spiegelfläche plan oder mit einer Krümmung ausgeführt sein kann.

17. Verfahren zur Herstellung eines adaptiven Spiegels, wobei auf eine erste Seite (2) einer Substratschicht (1) eine reflektierende Schicht (4) aufgebracht wird und auf eine zweite Seite (3) dieser Substratschicht (1) mindestens ein Aktor (5) aufgebracht wird, wobei der Aktor (5) eine aktive Schicht (7) und auf einer Vorder- und einer Rückseite der aktiven Schicht (7) angeordnete Elektroden (8,9) aufweist, wobei die Substratschicht (1) eine Dicke kleiner oder gleich 1000 µm aufweist, wobei die reflektierende Schicht (4) aus Metall und/oder Halbmetall besteht,
**dadurch gekennzeichnet, dass**
mindestens eine weitere Metallisierung zur thermischen Kompensation aufgebracht wird, wodurch eine thermische Verformung des Spiegels verhindert wird oder derart eingestellt wird, dass sich eine gewünschte Krümmung des Spiegels abhängig von der reflektierten Leistung einstelle,
wobei die Metallisierung ein Metall aufweist und in die Substratschicht (1) integriert oder über dem Aktor (5) angeordnet wird.

18. Verfahren nach Anspruch 17, **dadurch gekennzeichnet, dass** ein adaptiver Spiegel nach einem der Ansprüche 1 bis 16 hergestellt wird.

19. Verfahren nach einem der Ansprüche 17 oder 18, **dadurch gekennzeichnet, dass** auf die erste Oberfläche (2) der Substratschicht (1) eine Startschicht (10) aufgesputtert wird.

20. Verfahren nach einem der Ansprüche 17 bis 19, **dadurch gekennzeichnet, dass** auf die aufgesputterte Startschicht (10) eine reflektierende Schicht (11) galvanisch oder chemisch abgeschieden wird.

21. Verfahren nach einem der Ansprüche 17 bis 20, **dadurch gekennzeichnet, dass** die Substratschicht (1) und die reflektierende Schicht (11) durch Bonden miteinander verbunden werden.

22. Verfahren nach einem der Ansprüche 17 bis 21, dass eine reflektierende Schicht (11) über Siebdruckprozesse aufgebracht wird.

23. Verfahren nach einem der Ansprüche 17 bis 22, **dadurch gekennzeichnet, dass** die reflektierende Schicht (11) nach dem Aufbringen auf die Siebstratschicht (1) mittels Diamantbearbeitung in optischer Qualität strukturiert wird.

24. Verfahren nach einem der Ansprüche 17 bis 23, **dadurch gekennzeichnet, dass** die reflektierende Schicht (11) mit einer hochreflektiven Schichtfolge (12), welche dielektrische Materialien beinhaltet oder daraus besteht, beschichtet wird.

25. Verfahren nach einem der Ansprüche 17 bis 24, **dadurch gekennzeichnet, dass** die mindestens eine Aktorschicht (5) mittels Siebdruckverfahren und/oder Klebeverfahren und/oder Lötverfahren aufgebracht werden.

26. Verfahren nach einem der Ansprüche 17 bis 25, **dadurch gekennzeichnet, dass** die elektrisch leitfähigen Schichten (8, 9) mittels Siebdruckverfahren und/oder Klebeverfahren und/oder Lötverfahren aufgebracht werden.

## Claims

1. Adaptive mirror having a substrate layer (1), on the first surface (2) of which a reflecting layer (4) and on the second surface of which at least one actuator (5) is disposed, the actuator (5) having an active layer (7) and electrodes (8, 9) disposed on a front side and a back side of the active layer (7), the substrate layer (1) having a thickness of less than or equal to 1000 µm, and the reflecting layer (4) consisting of metal and/or metalloid,
**characterized in that**
the mirror has at least one further metallization for thermal compensation, as a result of which a thermal deformation of the mirror is avoided or preadjusted such that the desired curvature is set as a function of the reflected power,
the further metallization having a metal and being integrated in the substrate layer (1) or being disposed above the actuator (5).

2. Adaptive mirror according to the preceding claim, **characterized in that** the substrate layer (1), as a function of the substrate material, has a thickness of 100 µm to 500 µm in the case of Al₂O₃, of 90 µm to 400 µm in the case of Low Temperature Cofired Ceramics (LTCC) or of 300 µm to 800 µm in the case of silicon.

3. Adaptive mirror according to one of the preceding claims, **characterized in that** its diameter is greater than 25 mm, in particular greater than 50 mm, and/or less than 150 mm, in particular less than 100 mm.

4. Adaptive mirror according to one of the preceding claims, **characterized in that** the at least one further metallization is integrated in the substrate layer (1) or is disposed on the second surface (3).

5. Adaptive mirror according to one of the preceding claims, **characterized in that** the substrate layer (1) comprises ceramic materials, in particular glass ceramics, such as LTCC ceramics, aluminum oxide ceramic (Al₂O₃), aluminum nitride ceramic (AlN), green foils made of Al₂O₃ powder and organic binders, zirconium oxide (ZrO₂), cordierite materials, Clearceram-Z, or Astrosital, titanium silicate glass and lithiumaluminosilicate glass ceramics, and/or silicon and glass materials, such as silica glass, and/or polycrystalline diamond or consists of one or more of these materials.

6. Adaptive mirror according to one of the preceding claims, **characterized in that** the reflecting layer (4) has a thickness between 10 µm and 200 µm, preferably between 20 µm and 100 µm, particularly preferred between 40 µm and 60 µm.

7. Adaptive mirror according to one of the preceding claims, **characterized in that** the reflecting layer (4) has a layer made of metallic materials, in particular, copper, nickel, nickel phosphorus, gold, silver, tungsten, molybdenum, titanium, silicon and/or alloys thereof.

8. Adaptive mirror according to one of the preceding claims, **characterized in that** the heat expansion coefficient of the reflecting metallic layer (4) is greater than the heat expansion coefficient of the substrate layer (1).

9. Adaptive mirror according to one of the preceding claims, **characterized in that** the actuator layer (7) is disposed between to electrically conductive layers (8, 9) which are thin relative to the actuator layer (7).

10. Adaptive mirror according to the preceding claim, **characterized in that** the actuator layer (7) comprises a piezoelectric material and/or a ferroelectric material and/or a magnetostrictive material and/or an electrostrictive material and/or shape memory alloys and/or other suitable materials or consists of one or more of these materials.

11. Adaptive mirror according to claim 9 or 10, **characterized in that** the electrically conductive layers (8, 9) are structured into partial electrodes, the partial electrodes being disposed in a honeycomb shape or in a cake shape, in a square or by a combination of these geometric shapes.

12. Adaptive mirror according to one of the claims 9 to 11, **characterized in that** a single actuator layer (7) has a thickness between 50 µm and 300 µm, in particular a thickness between 80 µm and 150 µm.

13. Adaptive mirror according to one of the preceding claims, **characterized in that** a start layer (10) is sputtered onto the substrate layer (1), a reflecting layer (11) being deposited galvanically or chemically on the sputtered-on start layer (10) or is applied via screen printing processes.

14. Adaptive mirror according to the preceding claim, **characterized in that** the reflecting layer (11) deposited galvanically or chemically or applied via screen printing processes is structured in optical quality.

15. Adaptive mirror according to one of the claims 13 or 14, **characterized in that** the reflecting layer (11) deposited galvanically or chemically or applied via screen printing processes is coated with a highly reflective layer sequence (12).

16. Adaptive mirror according to one of the preceding claims, **characterized in that** the mirror surface can be configured to be planar or with a curvature.

17. Method for the production of an adaptive mirror, a reflecting layer (4) being applied on a first side (2) of a substrate layer (1) and at least one actuator (5) being applied on a second side (3) of this substrate layer (1), the actuator (5) having an active layer (7) and electrodes (8, 9) disposed on a front side and a back side of the active layer (7), the substrate layer having a thickness of less than or equal to 1,000 µm, and the reflecting layer (4) consisting of metal and/or metalloid,
**characterized in that**
at least one further metallization is applied for thermal compensation, as a result of which a thermal deformation of the mirror is avoided or preadjusted such that the desired curvature is set as a function of the reflected power,
the further metallization having a metal and being integrated in the substrate layer (1) or being disposed above the actuator (5).

18. Method according to claim 17, **characterized in that** an adaptive mirror according to one of the claims 1 to 16 is produced.

19. Method according to one of the claims 17 or 18, **characterized in that** a starter layer (10) is sputtered onto the first surface (2) of the substrate layer (1).

20. Method according to one of the claims 17 to 19, **characterized in that** a reflecting layer (11) is deposited galvanically or chemically on the sputtered-on starter layer (10).

21. Method according to one of the claims 17 to 20, **characterized in that** the substrate layer (1) and the reflecting layer (11) are connected to each other by bonding.

22. Method according to one of the claims 17 to 21, **characterized in that** a reflecting layer (11) is applied via screen printing processes.

23. Method according to one of the claims 17 to 22, **characterized in that** the reflecting layer (11) is structured in optical quality by means of a diamond machining after application on the substrate layer (1).

24. Method according to one of the claims 17 to 23, **characterized in that** the reflecting layer (11) is coated with a highly reflective layer sequence (12) which comprises dielectric materials or consists thereof.

25. Method according to one of the claims 17 to 24, **characterized in that** the at least one actuator layer (7) are applied by means of screen printing processes and/or adhesion processes and/or soldering processes.

26. Method according to one of the claims 17 to 25, **characterized in that** the electrically conductive layers (8, 9) are applied by means of screen printing processes and/or adhesion processes and/or soldering processes.

## Revendications

1. Miroir adaptatif comprenant une couche formant substrat (1), sur la première surface (2) de laquelle est disposée une couche réfléchissante (4) et sur la deuxième surface (3) de laquelle est disposé au moins un actionneur (5), l'actionneur (5) comprenant une couche active (7) et des électrodes (8, 9) disposées sur une face avant et une face arrière de la couche active (7), la couche formant substrat (1) ayant une épaisseur inférieure ou égale à 1000 µm, et la couche réfléchissante (4) étant constituée d'un métal et/ou d'un métalloïde,
**caractérisé en ce que** le miroir comprend au moins une métallisation supplémentaire pour une compensation thermique, grâce à laquelle une déformation thermique du miroir est empêchée ou est pré-ajustée de telle sorte qu'il se crée une courbure souhaitée du miroir, dépendant de la puissance réfléchie,
la métallisation supplémentaire comprenant un métal, et étant intégrée dans la couche formant substrat (1) ou étant disposée par-dessus l'actionneur (5).

2. Miroir adaptatif selon la revendication précédente, **caractérisé en ce que** la couche formant substrat (1) présente, selon le matériau du substrat, une épaisseur de 100 µm à 500 µm dans le cas de l'Al₂O₃, de 90 µm à 400 µm dans le cas d'une céramique co-frittée à basse température (LTCC), ou de 300 µm à 800 µm dans le cas du silicium.

3. Miroir adaptatif selon l'une des revendications précédentes, **caractérisé en ce que** son diamètre est supérieur à 25 mm, en particulier supérieur à 50 mm, et/ou est inférieur à 150 mm, en particulier inférieur à 100 mm.

4. Miroir adaptatif selon l'une des revendications précédentes, **caractérisé en ce que** la ou les métallisations supplémentaires sont intégrées dans la couche formant substrat (1) ou sont disposées sur la deuxième surface (3).

5. Miroir adaptatif selon l'une des revendications précédentes, **caractérisé en ce que** la couche formant substrat (1) contient des matériaux céramiques, en particulier des vitrocéramiques telles que les céramiques LTCC, la céramique d'oxyde d'aluminium (Al₂O₃), la céramique de nitrure d'aluminium (AIN), les feuilles brutes obtenues à partir de poudre d'Al₂O₃ et de liants organiques, l'oxyde de zirconium (ZrO₂), les matériaux de type cordiérite, le Clearceram-Z ou l'Astrosital, le verre au silicate de titane et les vitrocéramiques à l'aluminosilicate de lithium et/ou les matériaux de type silicium et verre tels que le verre de silice et/ou du diamant polycristallin, ou est constituée d'un ou plusieurs de ces matériaux.

6. Miroir adaptatif selon l'une des revendications précédentes, **caractérisé en ce que** la couche réfléchissante (4) présente une épaisseur comprise entre 10 µm et 200 µm, en particulier entre 20 µm et 100 µm, d'une manière particulièrement préférée entre 40 µm et 60 µm.

7. Miroir adaptatif selon l'une des revendications précédentes, **caractérisé en ce que** la couche réfléchissante (4) comprend une couche de matériaux métalliques, en particulier le cuivre, le nickel, le nickel-phosphore, l'or, l'argent, le tungstène, le molybdène, le titane, le silicium et/ou les alliages de ceux-ci.

8. Miroir adaptatif selon l'une des revendications précédentes, **caractérisé en ce que** le coefficient de dilatation thermique de la couche métallique réfléchissante (4) est supérieur au coefficient de dilatation thermique de la couche formant substrat (1).

9. Miroir adaptatif selon l'une des revendications précédentes, **caractérisé en ce que** la couche formant actionneur (7) est disposée entre deux couches conductrices de l'électricité (8, 9), qui sont minces par rapport à la couche formant actionneur (7).

10. Miroir adaptatif selon la revendication précédente, **caractérisé en ce que** la couche formant actionneur (7) contient un matériau piézoélectrique et/ou un matériau ferro-électrique et/ou un matériau magnétostrictif et/ou un matériau électrostrictif et/ou des alliages à mémoire de forme et/ou d'autres matériaux appropriés, ou est constituée d'un ou plusieurs de ces matériaux.

11. Miroir adaptatif selon l'une des revendications 9 ou 10, **caractérisé en ce que** les couches conductrices de l'électricité (8, 9) sont structurées en électrodes partielles, les électrodes partielles étant disposées en nid d'abeille ou en forme de part de tarte, d'une manière carrée ou selon une combinaison de ces formes géométriques.

12. Miroir adaptatif selon l'une des revendications 9 à 11, **caractérisé en ce qu'**une couche individuelle formant actionneur (7) présente une épaisseur comprise entre 50 µm et 300 µm, en particulier une épaisseur comprise entre 80 µm et 150 µm.

13. Miroir adaptatif selon l'une des revendications précédentes, **caractérisé en ce qu'**une couche de départ (10) est appliquée par pulvérisation cathodique sur la couche formant substrat (1), une couche réfléchissante (11) étant déposée par voie galvanique ou chimique ou appliquée par des procédés de sérigraphie sur la couche de départ (10) appliquée par pulvérisation cathodique.

14. Miroir adaptatif selon la revendication précédente, **caractérisé en ce que** la couche réfléchissante (11) déposée par voie galvanique ou chimique ou appliquée par des procédés de sérigraphie est structurée en qualité optique.

15. Miroir adaptatif selon l'une des revendications 13 ou 14, **caractérisé en ce que** la couche réfléchissante (11) déposée par voie galvanique ou chimique ou appliquée par des procédés de sérigraphie est revêtue d'une séquence de couches (12) à grand pouvoir de réflexion.

16. Miroir adaptatif selon l'une des revendications précédentes, **caractérisé en ce que** la surface du miroir peut être réalisée plane ou avec une certaine courbure.

17. Procédé de fabrication d'un miroir adaptatif, dans lequel une couche réfléchissante (4) est appliquée sur une première face (2) d'une couche formant substrat (1), et au moins un actionneur (5) est appliqué sur une deuxième face (3) de cette couche formant substrat (1), l'actionneur comprenant une couche active (7) et des électrodes (8, 9) disposées sur une face avant et une face arrière de la couche active (7), la couche formant substrat (1) présentant une épaisseur inférieure ou égale à 1000 µm, la couche réfléchissante (4) étant constituée d'un métal et/ou d'un métalloïde,
**caractérisé en ce qu'**au moins une métallisation supplémentaire pour compensation thermique est appliquée, ce à grâce à quoi une déformation thermique du miroir est empêchée ou est ajustée de telle sorte qu'il se crée une courbure souhaitée du miroir, dépendant de la puissance réfléchie,
la métallisation comprenant un métal et étant intégrée dans la couche formant substrat (1) ou disposée par-dessus l'actionneur (5).

18. Procédé selon la revendication 17, **caractérisé en ce qu'**on fabrique un miroir adaptatif selon l'une des revendications 1 à 16.

19. Procédé selon l'une des revendications 17 ou 18, **caractérisé en ce qu'**une couche de départ (10) est appliquée par pulvérisation cathodique sur une première surface (2) de la couche formant substrat (1).

20. Procédé selon l'une des revendications 17 à 19, **caractérisé en ce qu'**une couche réfléchissante (11) est déposée par voie galvanique ou chimique sur la couche de départ (10) appliquée par pulvérisation cathodique.

21. Procédé selon l'une des revendications 17 à 20, **caractérisé en ce que** la couche formant substrat (1) et la couche réfléchissante (11) sont assemblées l'une à l'autre par collage.

22. Procédé selon l'une des revendications 17 à 21, **caractérisé en ce qu'**une couche réfléchissante (11) est appliquée par des procédés de sérigraphie.

23. Procédé selon l'une des revendications 17 à 22, **caractérisé en ce que** la couche réfléchissante (11) est, après application sur la couche formant substrat (1), structurée en qualité optique par usinage au diamant.

24. Procédé selon l'une des revendications 17 à 23, **caractérisé en ce que** la couche réfléchissante (11) est revêtue d'une séquence de couches (12) à pouvoir de réflexion élevé, qui contient des matériaux diélectriques ou en est constituée.

25. Procédé selon l'une des revendications 17 à 24, **caractérisé en ce que** la ou les couches formant actionneur (5) sont appliquées par des procédés de sérigraphie et/ou des procédés par collage et/ou des procédés par soudage.

26. Procédé selon l'une des revendications 17 à 25, **caractérisé en ce que** les couches (8, 9) conductrices de l'électricité sont appliquées par des procédés de sérigraphie et/ou des procédés par collage et/ou des procédés par soudage.
